# FASCICULE DE BREVET EUROPEEN

(11) **EP 4 361 033 B1**
(45) Date de publication et mention de la délivrance du brevet: **30.04.2025**
(21) Numéro de dépôt: 23187770.5
(22) Date de dépôt: 26.07.2023
(51) Int. Cl.: B64C 27/24

(54) **HÉLICOPTÈRE HYBRIDE MUNI D'UN SYSTÈME D'ARRÊT ET DE POSITIONNEMENT DU ROTOR DE SUSTENTATION EN VOL DE CROISIÈRE ET PROCÉDÉ D'ARRÊT**
HYBRIDHUBSCHRAUBER MIT EINEM SYSTEM ZUM ANHALTEN UND POSITIONIEREN DES AUFTRIEBSROTORS IM REISEFLUG UND VERFAHREN ZUM ANHALTEN
HYBRID HELICOPTER EQUIPPED WITH A SYSTEM FOR STOPPING AND POSITIONING THE LIFT ROTOR IN CRUISE FLIGHT, AND STOPPING METHOD

(30) Priorité: 28.10.2022 FR 2211259
(43) Date de publication de la demande: 01.05.2024
(73) Titulaire: Airbus Helicopters, 13725 Marignane Cedex (FR)
(72) Inventeur: EGLIN, Paul, 13830 ROQUEFORT LA BEDOULE (FR)
(74) Mandataire: GPI Brevets

(56) Documents cités:
- EP-A1- 1 731 420
- WO-A1-2014/089604
- CN-A- 111 470 040
- FR-A1- 3 109 766
- US-A- 5 454 530
- US-A1- 2008 272 244
- US-A1- 2009 045 294

## Description

La présente invention se situe dans le domaine des hélicoptères hybrides, à savoir le domaine des giravions comportant deux demi-ailes fixes et au moins une hélice d'avancement.

La présente invention concerne un hélicoptère hybride muni d'un système d'arrêt et de positionnement du rotor de sustentation en vol de croisière.

Un giravion, désigné également « aéronef à voilure tournante », comporte traditionnellement une cellule et au moins un rotor de sustentation, entraîné en rotation par une installation motrice et assurant au moins partiellement la sustentation et/ou la propulsion du giravion. Le giravion peut aussi comporter un dispositif de sustentation pour permettre de contrôler les mouvements en lacet du giravion. Ce dispositif comporte parfois un rotor auxiliaire situé à l'arrière du giravion, voire à l'extrémité d'une poutre de queue prolongeant la cellule du giravion, et entraîné en rotation par l'installation motrice.

La poutre de queue est également susceptible de porter un ou plusieurs empennages permettant d'assurer une stabilité aérodynamique du giravion.

Un hélicoptère hybride est un giravion comportant au moins une aile fixe, composée par exemple de deux demi-ailes situées de part et d'autre de la cellule, et destinée à fournir une portance au giravion lors des vols de croisière, à savoir à vitesses d'avancement élevées.

Un hélicoptère hybride comporte également une ou plusieurs hélices d'avancement destinées à fournir une poussée utilisée principalement pour l'avancement du giravion. La ou les hélices d'avancement sont généralement entraînées en rotation par l'installation motrice du giravion.

Par exemple, deux hélices d'avancement peuvent être placées de part et d'autre de la cellule, et éventuellement sur chacune des demi-ailes du giravion. Les deux hélices sont susceptibles d'assurer également la fonction anticouple ainsi que le contrôle des mouvements en lacet du giravion.

Selon un autre exemple, un hélicoptère hybride peut comporter une unique hélice d'avancement agencée à l'arrière de la cellule.

L'installation motrice du giravion peut comporter un ou plusieurs moteurs thermiques, par exemple des turbines à gaz ou bien des moteurs à pistons, et/ou une ou plusieurs machines électriques ainsi qu'une ou plusieurs boîtes de transmission mécanique de puissance agencées respectivement entre d'une part les moteurs et d'autre part le rotor de sustentation et les hélices.

Pour un tel hélicoptère hybride, le rotor de sustentation est ainsi destiné à assurer la totalité de la portance pendant les phases de décollage, d'atterrissage et de vol vertical. Pendant les vols de croisière de l'hélicoptère hybride, la portance est assurée conjointement par le rotor de sustentation et l'aile fixe. Les forces propulsives pour l'avancement du giravion sont générées principalement par la ou les hélices en vol de croisière, le rotor de sustentation pouvant éventuellement fournir une faible contribution à ces forces propulsives.

De plus, en vol de croisière, la vitesse de rotation du rotor de sustentation peut être réduite, voire égale à zéro, afin de diminuer, sans l'annuler pour autant, sa traînée aérodynamique.

Par exemple, un aéronef connu sous la désignation « ROSA » comporte une cellule, deux demi-ailes, une hélice de propulsion et un rotor de sustentation bipale. En vol de croisière, la rotation du rotor peut être ralentie.

Selon un autre exemple, le document WO 2014/089604 décrit un aéronef comportant au moins une voilure fixe, un dispositif de propulsion et un rotor de sustentation muni d'au moins deux pales dont la rotation peut être arrêtée en vol, puis dont la position peut être verrouillée afin de former des surfaces d'aile symétriques par rapport à une direction longitudinale d'avancement de l'aéronef. Les pales peuvent comporter des profils aérodynamiques bidirectionnels, à savoir munis de bords d'attaque et de fuite identiques, ou des profils aérodynamiques symétriques.

Selon un autre exemple, un aéronef connu sous la désignation « X-Wing » ou « S-72 » comporte deux demi-ailes fixes agencées de part et d'autre d'une cellule, un rotor de sustentation muni de quatre pales à pas fixe ainsi qu'un rotor auxiliaire agencé sur une poutre de queue. Le rotor de sustentation peut être immobilisé en vol de croisière.

On connait aussi un aéronef, désigné par l'acronyme *CRW* pour la désignation « Canard Rotor Wing », décrit sur le site internet dont l'adresse est https://www.newscientist.com/article/dn2341-helicopter-plane-hybrid-ready-for-take-off/. Cet aéronef *CRW* comporte un rotor de sustentation muni de deux pales susceptibles d'être arrêtées en vol de croisière, les deux pales se transformant en ailes assurant la majorité de la portance de l'aéronef. Le rotor de sustentation est entraîné en rotation par des jets d'air expulsés à l'extrémité des pales et un moteur à réaction assure l'avancement de l'aéronef.

On connait encore un drone de la marque HoneyWell^{©} muni d'une aile, de quatre rotors de sustentation comportant deux pales à pas fixe et d'une hélice de propulsion. Le drone peut décoller et atterrir à l'aide des quatre rotors de sustentation. En vol de croisière, la rotation des quatre rotors de sustentation est stoppée, les pales étant positionnées longitudinalement.

On connait également un aéronef muni de deux rotors de sustentation agencés l'un derrière l'autre et muni d'une seule pale et de deux demi-ailes fixes agencées de part et d'autre d'une cellule. En vol de croisière, la rotation des deux rotors de sustentation peut être stoppée, les pales étant positionnées longitudinalement et vers l'arrière l'une derrière l'autre.

Le document FR 3109766 décrit un aéronef ayant au moins une voilure évolutive pouvant passer d'une configuration de voilure fixe à une configuration de voilure tournante et inversement, et susceptible de comporter des hélices et une ou plusieurs ailes fixes. Une telle voilure comporte deux ailes solidaires d'un rotor équipé d'un dispositif de commande à plateau cyclique. Dans la configuration de voilure fixe, les ailes sont orientées avec leur bord d'attaque tourné dans la direction d'avancement de l'aéronef. Dans la configuration de voilure tournante, les deux ailes de la voilure forment des pales ayant leur bord d'attaque orienté dans le sens de rotation du rotor, l'incidence des pales pouvant être modifiée. Un premier actionneur permet, lors d'un changement de configuration, une rotation d'une aile sur elle-même afin de modifier son orientation de sorte que le bord d'attaque de cette aile soit orienté face au flux d'air la balayant. L'aéronef comporte également un système d'embrayage permettant d'activer ou désactiver l'entraînement de la rotation du rotor, le rotor pouvant également tourner librement sur lui-même sous l'effet du vent relatif à la manière d'un autogire. Le rotor peut être freiné par tout dispositif de freinage adapté intégré au rotor et l'immobilisation du rotor peut être faite par un freinage.

Le document CN 111470040 décrit un aéronef muni d'une aile fixe à l'avant, d'un rotor muni de quatre pales et d'hélices de propulsion. Le rotor est tournant pour les phases de décollage et d'atterrissage notamment alors qu'il est arrêté et verrouillé en vol de croisière. Le rotor comporte deux pales principales qui sont arrêtées transversalement et deux pales auxiliaires qui sont arrêtées longitudinalement. Les pales principales comportent des profils aérodynamiques symétriques alors que les pales auxiliaires comportent des profils aérodynamiques asymétriques classiques de pales d'un rotor principal d'hélicoptère.

Le document US 2009/0045294 décrit un aéronef comprenant une cellule, un rotor muni de deux pales à profils symétriques, une aile fixe avant et un système de propulsion tel qu'un réacteur. Le rotor peut être en rotation et constituer une voilure tournante ou être fixe et former deux ailes fixes.

Le document EP 1731420 décrit un aéronef comportant un fuselage, des ailes fixes équipées d'ailerons, un empennage avec gouvernes, des moteurs de propulsion, un rotor muni de pales et équipés de freins, de moyens d'embrayage et de variation de pas des pales. Cet aéronef comporte également des moyens de passage entre les modes de fonctionnement hélicoptère, autogire et avion. Les pales du rotor peuvent avoir des profils symétriques.

Le document US 2008/0272244 décrit un aéronef hybride comportant un fuselage, un rotor muni de pales et de moyens de variation de leurs pas, deux ailes et une hélice de propulsion. Le rotor peut être tournant ou fixe. L'envergure des pales peut être réglable. Une partie de chaque pale est rétractable dans la pale elle-même afin de réduire sa trainée lorsque la rotation du rotor est arrêtée.

Le document US 5454530 décrit un aéronef comprenant un fuselage, un rotor muni de pales. Dans un premier mode de fonctionnement, le rotor est entraîné en rotation par au moins un moteur, faisant ainsi tourner les pales du rotor et permettant à l'aéronef de voler verticalement, de planer et de voler en translation à une vitesse relativement faible. Dans un second mode de fonctionnement, le rotor est arrêté et verrouillé pour empêcher sa rotation, les pales du rotor étant positionnées pour fonctionner comme des ailes fixes, permettant ainsi à l'avion de voler en translation à une vitesse relativement élevée.

La présente invention vise alors un hélicoptère hybride alternatif permettant de limiter sa traînée aérodynamique en vol de croisière, et par suite sa consommation de carburant et/ou d'énergie.

La présente invention a par exemple pour objet un tel hélicoptère hybride muni d'un système d'arrêt et de positionnement du rotor de sustentation ainsi qu'un procédé d'arrêt gérant l'arrêt du rotor de sustentation de cet hélicoptère hybride.

Tout d'abord, selon la présente invention, un hélicoptère hybride comporte :
- une cellule,
- un rotor de sustentation comportant deux pales diamétralement opposées,
- un mécanisme pour faire varier un pas des pales autour d'axes de pas AXPAS respectifs,
- une aile composée de deux demi-ailes agencées de part et d'autre de la cellule,
- au moins une hélice d'avancement, et
- une installation motrice reliée au rotor de sustentation par une première chaîne de transmission mécanique.

Le rotor de sustentation est par exemple agencé au-dessus de la cellule et peut être entraîné en rotation autour d'un axe de rotation AXROT par l'installation motrice, par l'intermédiaire de la première chaîne de transmission mécanique débouchant sur le rotor principal. La ou les hélices d'avancement sont également entraînées en rotation par l'installation motrice, par l'intermédiaire d'une seconde chaîne de transmission mécanique. La première chaîne de transmission mécanique et la seconde chaîne de transmission mécanique peuvent avoir des organes communs, par exemple une boîte principale de transmission de puissance.

Les deux pales du rotor de sustentation sont identiques et diamétralement opposées, à savoir réparties de façon symétrique, de part et d'autre de l'axe de rotation AXROT.

L'hélicoptère hybride selon l'invention est remarquable en ce qu'il comporte un système d'arrêt et de positionnement configuré pour arrêter une rotation du rotor de sustentation autour de l'axe de rotation AXROT en vol de croisière, et pour positionner les pales dans une position d'arrêt, perpendiculairement à une direction parallèle à un axe de roulis X de l'hélicoptère hybride.

Le système d'arrêt et de positionnement permet ainsi, lors d'un vol de croisière, d'arrêter la rotation des pales autour de l'axe de rotation AXROT et de positionner les pales à la position d'arrêt pour laquelle les pales ont respectivement des azimuts prédéterminés. La position d'arrêt est ainsi définie par des azimuts égaux respectivement pour les deux pales à +/-90° par rapport à l'axe de roulis de l'hélicoptère hybride. La position d'arrêt est aussi définie par les pales positionnées afin que leurs axes de pas AXPAS respectifs soient dans un plan perpendiculaire à un axe de roulis de l'hélicoptère hybride et parallèle à son axe de tangage.

Dans cette position d'arrêt, les pales peuvent par exemple être positionnées sensiblement parallèlement et au-dessus des demi-ailes et former alors avec les deux demi-ailes un système d'ailes biplan.

De la sorte, la traînée aérodynamique générée par chacune des pales de ce rotor principal dans la position d'arrêt, dont la rotation est arrêtée, est avantageusement significativement réduite par rapport à des pales en mouvement, même à vitesse de rotation réduite. Par la suite, la consommation d'énergie de l'hélicoptère hybride selon l'invention peut être réduite durant une phase de vol en croisière ou bien la vitesse de croisière peut être augmentée pour une consommation sensiblement identique à un giravion dont le rotor de sustentation est en rotation.

L'hélicoptère hybride est par exemple considéré être en vol de croisière dès que la vitesse d'avancement de l'hélicoptère hybride par rapport à l'air est supérieure à une vitesse seuil. Le vol de croisière est généralement un vol en palier horizontal, à savoir à une altitude sensiblement constante. La vitesse seuil est par exemple égale à 80 nœuds, soit environ 150 kilomètres par heure. Afin de déterminer que l'hélicoptère hybride est en vol de croisière, l'hélicoptère hybride peut comporter un dispositif de mesure d'une vitesse déterminant une vitesse d'avancement de l'hélicoptère hybride par rapport à l'air. Un dispositif de mesure d'une vitesse, habituel sur tout type d'aéronef, peut par exemple comporter un système à tube de Pitot.

De plus, l'axe de roulis X de l'hélicoptère hybride selon l'invention s'étend de l'avant vers l'arrière de la cellule, plus précisément d'une pointe avant de la cellule à l'extrémité arrière d'une poutre de queue prolongeant la cellule vers l'arrière de l'hélicoptère hybride, et est sensiblement confondu avec la direction d'avancement de l'hélicoptère hybride lors d'un vol de croisière à incidence nulle. L'incidence de l'hélicoptère hybride est l'angle entre son axe de roulis X et la direction du vent relatif balayant l'hélicoptère hybride, cet angle étant défini dans le plan vertical de l'hélicoptère hybride porté par ses axes de roulis et de lacet.

En vol de croisière, la direction du vent relatif balayant l'hélicoptère hybride peut souvent être sensiblement confondue avec la direction d'avancement de l'hélicoptère hybride. Les pales du rotor de sustentation sont alors arrêtées sensiblement perpendiculairement à une direction parallèle à cette direction d'avancement de l'hélicoptère hybride en vol de croisière.

Le flux d'air balayant les pales peut permettre aux pales de participer à la sustentation de l'aéronef, en complément de la portance générée par les deux demi-ailes. La portance totale de l'hélicoptère hybride est répartie entre les demi-ailes et les deux pales. Cette portance totale est donc fonction des dimensions des deux demi-ailes et de celles des deux pales. Par exemple, les deux demi-ailes peuvent générer 90% de la portance totale de l'hélicoptère hybride, les deux pales générant les 10% restants.

L'hélicoptère hybride selon l'invention peut comporter une ou plusieurs des caractéristiques qui suivent, prises seules ou en combinaison.

Selon un exemple, les pales peuvent comporter des profils aérodynamiques bidirectionnels permettant des comportements aérodynamiques identiques des pales, qu'elles soient balayées par un flux d'air d'un bord d'attaque des profils aérodynamiques vers un bord de fuite des profils aérodynamiques ou par un flux d'air du bord de fuite vers le bord d'attaque. Ainsi, lorsque le rotor de sustentation est arrêté en vol de croisière, une des deux pales est balayée par un flux d'air allant d'un bord d'attaque de ses profils aérodynamiques vers un bord de fuite de ses profils aérodynamiques alors que l'autre des deux pales est balayée par un flux d'air allant du bord de fuite vers le bord d'attaque de ses profils aérodynamiques.

Les profils aérodynamiques bidirectionnels de ces deux pales permettent ainsi que les deux pales aient des comportements aérodynamiques sensiblement identiques et génèrent notamment la même portance.

Chaque profil aérodynamique bidirectionnel des deux pales comporte par exemple un bord d'attaque et un bord de fuite identiques. Chaque profil aérodynamique bidirectionnel peut être symétrique par rapport à un plan vertical situé à mi-distance des bords d'attaque et de fuite.

Chaque profil aérodynamique bidirectionnel peut être un profil elliptique. Un tel profil aérodynamique bidirectionnel elliptique peut comporter une cambrure nulle ou bien avoir une ligne de cambrure elle aussi symétrique par rapport à un plan vertical situé à mi-distance des bords d'attaque et de fuite.

Selon un autre exemple compatible avec les précédents, l'hélicoptère hybride peut comprendre au moins deux hélices, agencées respectivement sur les deux demi-ailes. Par exemple, l'hélicoptère hybride peut comprendre deux hélices, une hélice étant agencée sur chacune des deux demi-ailes, à savoir de part et d'autre de la cellule. Lesdites au moins deux hélices permettent ainsi de générer des forces aérodynamiques participant à l'avancement de l'hélicoptère hybride. Lesdites au moins deux hélices peuvent permettre également de générer des forces aérodynamiques contribuant au contrôle du mouvement en lacet de l'aéronef.

Selon un autre exemple compatible avec les précédents, le système d'arrêt et de positionnement peut comporter un dispositif d'alignement des pales pour vérifier une position desdites pales autour de l'axe de rotation AXROT et ainsi assurer un arrêt du rotor de sustentation lorsque les pales sont positionnées selon la position d'arrêt.

Ce dispositif d'alignement des pales peut comporter par exemple un senseur angulaire mesurant directement ou indirectement un angle en azimut d'au moins une des deux pales autour de l'axe de rotation AXROT par rapport à une référence de l'hélicoptère hybride, par exemple son axe de roulis X. Le rotor de sustentation est immobilisé lorsque l'angle mesuré par le senseur angulaire est égal à une valeur prédéterminée correspondant à un alignement des pales avec la position d'arrêt.

De manière complémentaire ou alternative, le dispositif d'alignement des pales peut par exemple comporter un senseur de proximité positionné sur la cellule et coopérant avec un repère positionné sur le rotor principal, par exemple sur un mât tournant du rotor de sustentation. Le senseur de proximité et le repère peuvent être agencés de sorte à être le plus proche l'un de l'autre lorsque les pales sont situées à la position d'arrêt. L'arrêt du rotor de sustentation est alors réalisé par exemple lorsque le senseur de proximité est situé au plus proche, voire au droit, du repère.

Selon un autre exemple compatible avec les précédents, le système d'arrêt et de positionnement peut comporter un frein agissant sur un mât du rotor de sustentation afin de ralentir la rotation du rotor de sustentation autour de l'axe de rotation AXROT jusqu'à son arrêt. De manière complémentaire ou alternative, le système d'arrêt et de positionnement peut piloter le mécanisme permettant une variation de pas des pales pour modifier le pas des pales respectivement autour des axes de pas AXPAS afin de générer des forces aérodynamiques, et notamment une traînée aérodynamique importante, provoquant un ralentissement de la rotation des pales autour de l'axe de rotation AXROT.

Selon un autre exemple compatible avec les précédents, le système d'arrêt et de positionnement peut comporter un dispositif de verrouillage pour verrouiller les pales à la position d'arrêt. Par exemple, le frein et le dispositif de verrouillage peuvent former un unique dispositif. Selon un autre exemple, le dispositif de verrouillage peut comporter plusieurs butées, au moins une butée solidaire du rotor de sustentation et au moins une butée mobile reliée à la cellule du giravion, formant un verrouillage mécanique des pales du rotor de sustentation à la position d'arrêt. Ladite au moins une butée mobile peut ainsi être en position escamotée pour permettre la rotation des pales et peut être déplacée afin de coopérer avec une butée solidaire du rotor de sustentation pour bloquer les pales à la position d'arrêt et interdire leur rotation autour de l'axe de rotation AXROT.

Selon un autre exemple compatible avec les précédents, le système d'arrêt et de positionnement peut comporter un dispositif de désengagement pour désengager de façon réversible le rotor de sustentation et la première chaîne de transmission mécanique. Le dispositif de désengagement peut permettre ainsi d'arrêter l'entrainement en rotation du rotor de sustentation par l'installation motrice dès que l'hélicoptère hybride est en vol de croisière, à savoir dès que sa vitesse d'avancement par rapport à l'air est supérieure à la vitesse seuil. Le système d'arrêt et de positionnement peut comporter un calculateur pour comparer la vitesse d'avancement par rapport à l'air de l'hélicoptère hybride à la vitesse seuil et pour commander le dispositif de désengagement.

Inversement, le dispositif de désengagement peut permettre d'entrainer de nouveau en rotation le rotor de sustentation par l'installation motrice, via la première chaîne de transmission mécanique dès que l'hélicoptère hybride n'est plus en vol de croisière, à savoir dès que sa vitesse d'avancement par rapport à l'air est inférieure à la vitesse seuil.

Le dispositif de désengagement peut être agencé au sein de la première chaîne de transmission mécanique débouchant sur le rotor principal. Le dispositif de désengagement comporte par exemple un embrayage ou une roue libre pilotée.

Selon un autre exemple compatible avec les précédents, le système d'arrêt et de positionnement peut comporter un dispositif de blocage de pas permettant de bloquer le mécanisme permettant une variation du pas lorsque la rotation du rotor de sustentation est arrêtée. Ainsi, après l'arrêt du rotor principal, chaque pale n'est plus mobile autour de son axe de pas AXPAS.

Les pales peuvent être bloquées avec une valeur de pas prédéterminée autour de leurs axes de pas AXPAS respectifs. Par exemple, chaque pale est bloquée avec un pas prédéterminé autour de son axe de pas AXPAS générant une portance de la pale faible, voire sensiblement nulle.

Alternativement, les pales peuvent être bloquées avec des composantes de pas collectif et de pas cyclique du pas des pales ajustées sur des valeurs moyennes fixes correspondant à une portance prédéterminée pour les pales, par exemple de l'ordre de 10% de la portance totale de l'hélicoptère hybride en vol de croisière. Le vol de croisière se déroule principalement avec une incidence nulle de l'hélicoptère hybride.

Le dispositif de blocage peut être inséré dans le mécanisme permettant une variation de pas ou bien piloter un actionneur agissant sur ce mécanisme ou encore piloter directement ce mécanisme afin de le bloquer.

Selon un autre exemple compatible avec les précédents, le système d'arrêt et de positionnement peut comporter un dispositif de détermination d'une incidence déterminant une incidence de l'hélicoptère hybride et un dispositif de variation de pas pilotant le mécanisme permettant une variation du pas pour déplacer les pales autour de leurs axes de pas AXPAS respectifs en fonction de l'incidence.

Le dispositif de détermination d'une incidence comporte par exemple un ou plusieurs senseurs usuels afin de mesurer ou estimer l'angle entre l'axe de roulis X de l'hélicoptère hybride et la direction du vent relatif balayant l'hélicoptère hybride, cet angle étant défini dans un plan vertical d'un référentiel terrestre. Ensuite, en fonction de cet angle égal à l'incidence de l'hélicoptère hybride, le dispositif de variation de pas peut agir en vol pour modifier le pas des pales, éventuellement selon une composante de pas collectif et une composante de pas cyclique, afin de maintenir une portance sensiblement constante des pales. Maintenir les pales à une portance sensiblement constante permet également d'éviter des mouvements en battement et/ou en traînée des pales qui se produiraient lors de variations de cette portance. Ces mouvements pourraient être d'autant plus importants que la rotation des pales étant arrêtée, il n'y a pas de force centrifuge tendant à fournir un rappel à plat à ces pales.

Le dispositif de variation de pas peut par exemple piloter directement le mécanisme permettant une variation du pas, ou comporter un actionneur agissant sur ce mécanisme de variation du pas afin de déplacer les pales autour de leurs axes de pas AXPAS respectifs.

Le système d'arrêt et de positionnement peut comporter un calculateur pour déterminer la variation de pas à appliquer à chaque pale en fonction de l'incidence de l'hélicoptère hybride par exemple selon une loi préétablie. La loi préétablie peut avoir été définie lors d'essais en vol par exemple.

Selon un autre exemple compatible avec les précédents, le mécanisme permettant une variation du pas peut comporter deux bielles de commande de pas, reliées respectivement à chacune des deux pales. Chaque bielle de commande de pas est reliée, directement ou indirectement, à une des pales, par un levier de pas en avant d'un bord d'attaque de la pale. La longueur de ce levier de pas peut être comprise entre 15% et 60% d'une corde de la pale, la corde étant la distance entre le bord d'attaque et le bord de fuite d'un profil aérodynamique. La corde prise en compte pour déterminer la longueur de ce bras de levier peut être la corde en pied de pale ou une corde moyenne sur la totalité de l'envergure de la pale par exemple.

La longueur du levier de pas supérieure à une longueur traditionnelle d'un tel levier de pas, qui est par exemple de l'ordre de 25% de la corde moyenne, évite avantageusement une augmentation importante des charges aérodynamiques sur les pales, et notamment sur la pale en secteur reculant, lorsque la rotation du rotor de sustentation est arrêtée.

Selon un autre exemple compatible avec les précédents, le rotor de sustentation peut comporter une tête de rotor et deux articulations reliant respectivement les pales à la tête de rotor. Chacune des pales est, grâce au moins une de ces articulations, mobile en rotation par rapport à la tête de rotor autour d'un axe de battement AXBAT orienté tangentiellement par rapport à l'axe de rotation AXROT et autour d'un axe de traînée AXTR parallèle à l'axe de rotation AXROT. Dans ce cas, le rotor de sustentation est considéré comme comportant un moyeu dit « articulé » reliant les pales à un mât du rotor de sustentation.

Le système d'arrêt et de positionnement peut comporter alors un dispositif de bridage pour bloquer en rotation chacune des pales autour de son axe de battement AXBAT et autour de son axe de traînée AXTR. Le blocage des mouvements de rotation autour des axes de battement AXBAT et de traînée AXTR, lorsque la rotation du rotor de sustentation est arrêtée, permet ainsi à chaque pale de se rapprocher du comportement d'une aile fixe en évitant par exemple que de tels mouvements perturbent le comportement aérodynamique de la pale et/ou ne génèrent des variations de portance de la pale.

Alternativement, le rotor de sustentation peut comporter un moyeu dit « rigide » ne comportant ni articulation de battement, ni articulation de traînée reliant les pales à une tête de rotor. Des mouvements de battement et en traînée restent possibles, dans les limites de souplesse des pales.

La présente invention vise également un procédé d'arrêt d'une rotation d'un rotor de sustentation d'un hélicoptère hybride en vol de croisière, l'hélicoptère hybride comportant :
- une cellule,
- un rotor de sustentation comportant deux pales diamétralement opposées,
- un mécanisme pour faire varier un pas des pales autour d'axes de pas AXPAS respectifs,
- une aile composée de deux demi-ailes agencées de part et d'autre de la cellule,
- au moins une hélice d'avancement,
- une installation motrice reliée au rotor de sustentation par une première chaîne de transmission mécanique, l'installation motrice entraînant en rotation le rotor de sustentation et ladite au moins une hélice, et
- un dispositif de mesure d'une vitesse déterminant une vitesse d'avancement de l'hélicoptère hybride par rapport à l'air.

Le procédé comporte les étapes suivantes :
- désengagement du rotor de sustentation et de la première chaîne de transmission mécanique en vol de croisière, dès que la vitesse d'avancement de l'hélicoptère hybride par rapport à l'air est supérieure à une vitesse seuil,
- freinage de la rotation du rotor de sustentation autour de l'axe de rotation AXROT,
- arrêt de la rotation du rotor principal, les pales étant arrêtées à une position d'arrêt de sorte à être positionnées perpendiculairement à une direction parallèle à un axe de roulis X de l'hélicoptère hybride, et
- verrouillage en rotation du rotor de sustentation autour de l'axe de rotation AXROT à la position d'arrêt.

Le désengagement du rotor de sustentation et de la première chaîne de transmission mécanique en vol de croisière permet que le rotor de sustentation ne soit plus entraîné en rotation par l'installation motrice, en vue de son arrêt en rotation. Ce désengagement peut être réalisé par exemple à l'aide d'un dispositif de désengagement de l'hélicoptère hybride agencé par exemple sur la première chaîne de transmission mécanique.

Le freinage de la rotation du rotor de sustentation autour de l'axe de rotation AXROT est ensuite réalisé, par exemple à l'aide d'un système d'arrêt et de positionnement de l'hélicoptère hybride jusqu'à l'arrêt des pales à la position d'arrêt.

Enfin, le verrouillage en rotation du rotor de sustentation autour de l'axe de rotation AXROT est réalisé afin d'empêcher toute rotation des pales autour de l'axe de rotation AXROT, notamment sous l'effet du flux d'air provoqué par l'avancement de l'hélicoptère hybride. Les pales sont ainsi verrouillées à la position d'arrêt.

Le procédé selon l'invention peut comporter une ou plusieurs des caractéristiques qui suivent, prises seules ou en combinaison.

Selon un exemple, le procédé peut comporter une mise à une valeur de pas prédéterminée des pales lorsque la rotation des pales est arrêtée, le mécanisme permettant une variation du pas agissant sur les pales pour modifier leurs pas autour de leurs axes de pas AXPAS respectifs selon ce pas prédéterminé.

De manière complémentaire ou alternative, le procédé peut comporter un blocage du mécanisme permettant une variation du pas lorsque la rotation des pales est arrêtée. Chaque pale peut être bloquée avec une valeur de pas prédéterminée, par exemple une valeur de pas prédéterminée générant une portance de la pale faible, voire sensiblement nulle.

Selon un autre exemple compatible avec les précédents, le procédé peut comporter une détermination d'une incidence de l'hélicoptère hybride et une variation du pas des pales en fonction de l'incidence lorsque la rotation des pales est arrêtée.

Selon un autre exemple compatible avec les précédents, chaque pale est mobile par rapport à une tête de rotor par l'intermédiaire d'articulations en rotation autour d'un axe de battement AXBAT orienté tangentiellement par rapport à l'axe de rotation AXROT et autour d'un axe de traînée AXTR parallèle à l'axe de rotation AXROT, et le procédé peut comporter un blocage pour bloquer en rotation les pales autour de l'axe de battement AXBAT et autour de l'axe de traînée AXTR.

Selon un autre exemple compatible avec les précédents, le procédé peut comporter un réengagement du rotor de sustentation avec la première chaîne de transmission mécanique dès que la vitesse d'avancement de l'hélicoptère hybride par rapport à l'air est inferieure à la vitesse seuil. De la sorte, après réengagement, le rotor de sustentation est de nouveau lié à la première chaîne de transmission mécanique et les pales sont ainsi entraînées en rotation autour de l'axe de rotation AXROT par l'installation motrice. Les pales peuvent alors générer une portance contribuant de façon significative à la sustentation de l'hélicoptère hybride.

L'invention et ses avantages apparaîtront avec plus de détails dans le cadre de la description qui suit avec des exemples donnés à titre illustratif en référence aux figures annexées qui représentent :
- la figure 1, une vue en perspective d'un hélicoptère hybride selon l'invention,
- la figure 2, une vue schématique d'un exemple d'hélicoptère hybride selon l'invention,
- la figure 3, une vue schématique d'un autre exemple d'hélicoptère hybride selon l'invention,
- la figure 4, une section représentant un profil aérodynamique d'une pale, et
- la figure 5, un schéma illustrant un procédé d'arrêt d'une rotation d'un rotor de sustentation d'un hélicoptère hybride en vol de croisière.

Les éléments présents dans plusieurs figures distinctes sont affectés d'une seule et même référence.

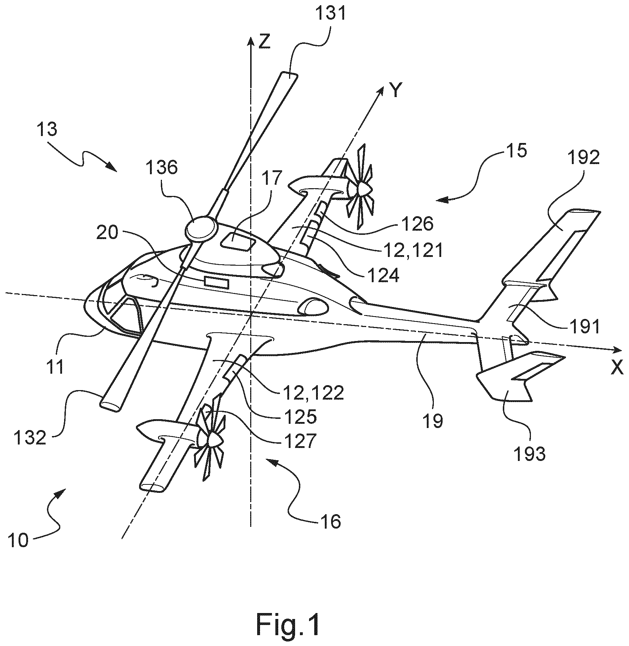

La figure 1 représente un hélicoptère hybride 10 selon l'invention comportant une cellule 11, un rotor 13 de sustentation agencé au-dessus de la cellule 11, une aile 12 composée de deux demi-ailes 121,122, au moins une hélice 15,16 d'avancement. L'hélicoptère hybride 10 comporte également une installation motrice 17 reliée au rotor 13 de sustentation et à ladite au moins une hélice 15,16.

Le rotor 13 de sustentation comporte deux pales 131,132 diamétralement opposées et une tête de rotor 136 à laquelle sont reliées les pales 131,132. Les deux pales 131,132 sont conjointement mobiles en rotation autour d'un axe de rotation AXROT lorsque le rotor 13 est en mouvement.

L'hélicoptère hybride 10 comporte aussi un système d'arrêt et de positionnement 20 configuré pour arrêter une rotation du rotor 13 autour de l'axe de rotation AXROT en vol de croisière et pour positionner les pales 131,132 dans une position d'arrêt.

Sur la figure 1, trois directions privilégiées associées à l'hélicoptère hybride 10 sont représentées. Une direction longitudinale X s'étend de l'avant vers l'arrière de l'hélicoptère hybride 10, c'est à dire d'une pointe avant de la cellule 11 à l'extrémité arrière de la poutre de queue 19. Une direction d'élévation Z s'étend de haut en bas perpendiculairement à la direction longitudinale X. Enfin, une direction transversale Y s'étendant de droite à gauche perpendiculairement aux directions longitudinale X et d'élévation Z.

La direction longitudinale X est confondue avec l'axe de roulis de l'hélicoptère hybride 10, la direction transversale Y est confondue avec son axe de tangage et la direction d'élévation Z est confondue avec son axe de lacet.

Selon la figure 1, un exemple d'hélicoptère hybride 10 selon l'invention peut comporter deux hélices 15,16 d'avancement agencées respectivement sur les deux demi-ailes 121,122, et donc de part et d'autre de la cellule 11. Alternativement, un hélicoptère hybride 10 selon l'invention peut comporter une seule hélice d'avancement ou plus de deux hélices d'avancement. De même, un hélicoptère hybride 10 selon l'invention peut comporter plus de deux demi-ailes 121,122.

Les demi-ailes 121,122 sont fixes et peuvent comporter des gouvernes mobiles 124,125 et/ou des volets hypersustentateurs 126,127.

L'hélicoptère hybride 10 peut aussi comporter de façon optionnelle une poutre de queue 19 prolongeant la cellule 11 et portant des empennages 191,192,193. Les empennages 191,192,193 peuvent comporter des gouvernes ou des volets mobiles.

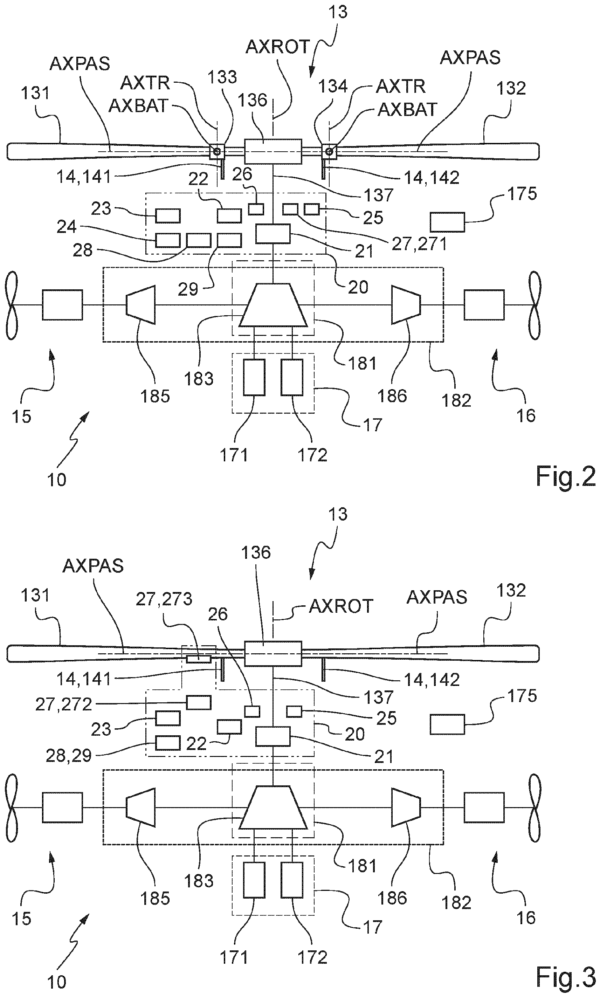

Les figures 2 et 3 représentent deux vues schématiques de deux exemples de réalisation d'hélicoptères hybrides 10 selon l'invention.

De façon commune, les deux exemples d'hélicoptères hybrides 10 comportent deux hélices 15,16, une première chaîne de transmission mécanique 181, une seconde chaîne de transmission mécanique 182 et un mécanisme 14 de variation du pas pour faire varier le pas des pales 131,132.

L'installation motrice 17 comporte au moins un moteur 171,172, et par exemple deux moteurs 171,172. Ledit au moins un moteur 171,172 peut par exemple être thermique ou électrique.

La première chaîne de transmission mécanique 181 relie ainsi le rotor 13, et plus précisément un mât 137 du rotor 13, à l'installation motrice 17 afin de mettre en rotation le rotor de sustentation 13. La seconde chaîne de transmission mécanique 182 relie l'installation motrice 17 aux deux hélices 15,16 afin de mettre en rotation le rotor de sustentation 13 et les hélices 15,16. La première chaîne de transmission mécanique 181 et la seconde chaîne de transmission mécanique 182 peuvent comporter de façon commune une boîte principale de transmission de puissance 183 reliant l'installation motrice 17 respectivement à la première chaîne de transmission mécanique 181 et à la seconde chaîne de transmission mécanique 182. La seconde chaîne de transmission mécanique 182 peut comporter deux boîtes auxiliaires de transmission de puissance 185,186 agencées respectivement entre la boîte principale de transmission de puissance 183 et une des deux hélices 15,16.

Le mécanisme 14 de variation du pas comporte deux bielles 141,142 de commande de pas, reliées respectivement aux deux pales 131,132 et un dispositif de déplacement non représenté pour déplacer les bielles 141,142. Le dispositif de déplacement peut comporter de façon usuelle un plateau inclinable tournant auquel sont reliées les bielles 141,142 et un plateau inclinable non tournant coopérant avec le plateau inclinable tournant afin de commander des déplacements des bielles 141,142. Chaque bielle 141,142 est reliée à une pale 131,132 avec un levier de pas 138, solidaire de la pale 131,132, en avant d'un bord d'attaque BA de la pale 131,132. De la sorte, un mouvement du plateau inclinable non tournant entraîne via le plateau inclinable tournant un déplacement des bielles 141,142 provoquant une rotation des pales 141,142 respectivement autour de leurs axes de pas AXPAS respectifs. La rotation de chaque pale 141,142 correspond à la variation de pas de la pale 141,142. Ce pas d'une pale 141,142i peut se décomposer en une composante de pas collectif et une composante de pas cyclique.

De façon optionnelle, l'hélicoptère hybride 10 peut comporter un dispositif de mesure d'une vitesse 175 permettant de déterminer de façon usuelle une vitesse d'avancement de l'hélicoptère hybride 10 par rapport à l'air, par exemple à l'aide d'un système à tube de Pitot.

Le système d'arrêt et de positionnement 20 est configuré pour arrêter une rotation du rotor 13 autour de l'axe de rotation AXROT en vol de croisière à la position d'arrêt. Suite à cet arrêt, les pales 131,132 sont positionnées à la position d'arrêt avec des azimuts prédéterminés autour de l'axe de rotation AXROT égaux à +/-90° par rapport à l'axe de roulis de l'hélicoptère hybride 10. Le rotor 13 est ainsi positionné perpendiculairement à une direction parallèle à l'axe de roulis X de l'hélicoptère hybride 10.

L'arrêt de la rotation du rotor 13 à la position d'arrêt est réalisé lorsque l'hélicoptère hybride 10 est en vol de croisière. Cette condition peut être vérifiée par un calculateur 26 du système d'arrêt et de positionnement 20. Par exemple, le calculateur 26 reçoit, par une liaison filaire ou sans fil, un signal de vitesse, analogique ou numérique, électrique ou optique, émis par le dispositif de mesure d'une vitesse 175 et porteur d'une information de la vitesse d'avancement de l'hélicoptère hybride 10 par rapport à l'air. Ensuite, le calculateur 26 compare cette vitesse d'avancement à une vitesse seuil stockée dans une mémoire du calculateur 26 ou dans une mémoire reliée au calculateur 26. Si la vitesse d'avancement est supérieure à la vitesse seuil, le calculateur 26 émet un signal de commande, analogique ou numérique, électrique ou optique, et le transmet par une liaison filaire ou sans fil au système d'arrêt et de positionnement 20. Ce signal de commande est porteur d'une information de commande confirmant que l'hélicoptère hybride 10 est en vol de croisière.

Le calculateur 26 peut comporter au moins un processeur et au moins une mémoire, au moins un circuit intégré, au moins un système programmable ou bien au moins un circuit logique, ces exemples ne limitant pas la portée donnée à l'expression « calculateur ». Le calculateur 26 peut être un calculateur dédié au système d'arrêt et de positionnement 20 ou être un calculateur partagé ayant de multiples fonctions. La mémoire peut par exemple stocker une ou plusieurs valeurs seuil ainsi qu'un ou plusieurs algorithmes afin de réaliser un procédé par exemple.

Une fois arrêtées à la position d'arrêt, et donc aux azimuts prédéterminés, les pales 131, 132 ont un comportement aérodynamique sensiblement semblable au comportement aérodynamique d'une aile fixe. Notamment, une portance peut être générée grâce au flux d'air balayant les pales 131,132 lors de l'avancement de l'hélicoptère hybride 10. L'arrêt de la rotation des pales 131,132 permet avantageusement de réduire la traînée aérodynamique des pales 131,132.

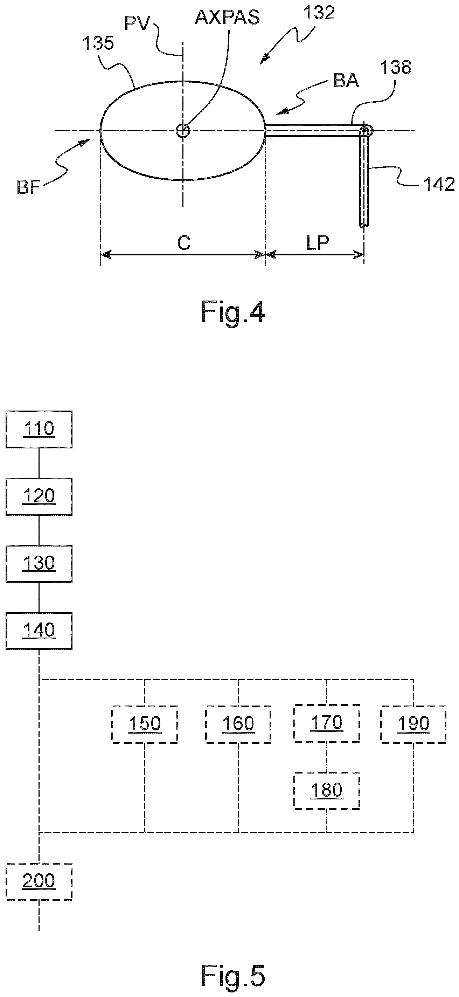

Afin de conférer un bon comportement aérodynamique aux deux pales 131,132 lorsque la rotation du rotor 13 est arrêtée, ces deux pales 131,132 peuvent comporter des profils aérodynamiques 135 bidirectionnels. Un exemple d'un profil aérodynamique 135 bidirectionnel est représenté à la figure 4. Un profil aérodynamique 135 bidirectionnel comporte un bord d'attaque BA et un bord de fuite BF sensiblement identiques, voire strictement identiques.

Un profil aérodynamique 135 bidirectionnel peut aussi être symétrique par rapport à un plan vertical PV. Un profil aérodynamique 135 bidirectionnel peut aussi être elliptique.

Pour assurer un arrêt du rotor 13 avec les pales 131,132 ainsi positionnées, le système d'arrêt et de positionnement 20 peut comporter un dispositif d'alignement 27 des pales 131,132 permettant de vérifier la position des pales 131,132 en azimut autour de l'axe de rotation AXROT avant l'arrêt effectif de la rotation des pales 131,132.

Selon l'exemple d'hélicoptère hybride de la figure 2, le dispositif d'alignement 27 peut être muni par exemple d'un senseur angulaire 271 mesurant un angle en azimut d'au moins une des deux pales 131,132 autour de l'axe de rotation AXROT. Cet angle est mesuré par rapport à une référence fixe de l'hélicoptère hybride 10, par exemple son axe de roulis X ou le plan contenant les axes de roulis X et de lacet Z. L'arrêt des pales 131,132 est alors réalisé lorsque l'angle mesuré par le senseur angulaire 271 est égal à une valeur prédéterminée, par exemple égal à +/-90°, correspondant à la position d'arrêt des pales 131,132.

Selon l'exemple d'hélicoptère hybride 10 de la figure 3, le dispositif d'alignement 27 peut comporter un senseur de proximité 272 positionné par exemple sur la cellule 11 et coopérant avec un repère 273 positionné sur un mât 137 du rotor 13. Alternativement, le senseur de proximité 272 peut être positionné sur le rotor 13 et le repère 273 peut être positionné sur la cellule 11. L'arrêt des pales 131,132 est alors réalisé lorsque le senseur de proximité 272 est situé au plus proche du repère 273, voire au droit du repère 273.

Par ailleurs, le système d'arrêt et de positionnement 20 peut comporter un dispositif de désengagement 21, agencé par exemple entre le rotor 13 et la première chaîne de transmission mécanique 181, pour d'arrêter de façon réversible l'entraînement en rotation du rotor 13 par l'installation motrice 17. Le dispositif de désengagement 21 peut être agencé au sein de la première chaîne de transmission mécanique 181 débouchant sur le mât 137 du rotor 13. Dans ce but, le dispositif de désengagement 21 peut comporter un embrayage par exemple. Le dispositif de désengagement 21 peut être piloté par le calculateur 26 en fonction de la vitesse d'avancement de l'hélicoptère hybride 10 par rapport à l'air.

Par exemple, le calculateur 26 émet un signal de commande déterminé selon une loi mémorisée en fonction du signal de vitesse émis par le dispositif de mesure d'une vitesse 175 et de la vitesse seuil, puis transmet ce signal de commande, par une liaison filaire ou sans fil, au dispositif de désengagement 21. Ce signal de commande est porteur d'une information de commande pilotant le dispositif de désengagement 21 afin de désengager le rotor 13 et la première chaîne de transmission mécanique 181.

Par la suite, dès que la vitesse d'avancement de l'hélicoptère hybride 10 par rapport à l'air est inférieure à la vitesse seuil, l'hélicoptère hybride 10 n'étant alors plus en vol de croisière, le calculateur 26 émet un autre signal de commande vers le dispositif de désengagement 21, ce signal de commande étant alors porteur d'une information de commande pilotant le dispositif de désengagement 21 afin de réengager le rotor 13 et la première chaîne de transmission mécanique 181 afin de remettre en rotation le rotor 13.

En outre, le système d'arrêt et de positionnement 20 peut comporter un frein 29 agissant par exemple sur un mât 137 du rotor de sustentation 13 afin de ralentir la rotation du rotor de sustentation 13 autour de l'axe de rotation AXROT.

De manière complémentaire ou alternative, le système d'arrêt et de positionnement 20 peut piloter le mécanisme 14 de variation de pas des pales 131,132 afin de modifier le pas des pales 131,132 pour générer des forces aérodynamiques, en particulier une traînée aérodynamique importante, provoquant un ralentissement de la rotation des pales 131,132 autour de l'axe de rotation AXROT une fois que le rotor 13 n'est plus entraîné en rotation par l'installation motrice 17.

Le système d'arrêt et de positionnement 20 peut aussi comporter un dispositif de verrouillage 28 pour verrouiller les pales 131,132 à la position d'arrêt, une fois la rotation des pales 131,132 arrêtée.

Le système d'arrêt et de positionnement 20 peut comporter simultanément un frein 29 et un dispositif de verrouillage 28 distincts comme indiqué sur la figure 2. Le dispositif de verrouillage 28 peut alors comporter plusieurs butées, dont certaines sont mobiles, coopérant être elles dans une première position pour former un verrouillage mécanique des pales 131,132 à la position d'arrêt et autorisant dans une seconde position la rotation des pales 131,132. Alternativement, le système d'arrêt et de positionnement 20 peut comporter un frein 29 et un dispositif de verrouillage 28 regroupés au sein d'un même dispositif comme indiqué sur la figure 3.

Le système d'arrêt et de positionnement 20 peut comporter un dispositif de blocage 22 de pas permettant de bloquer le mécanisme 14 de variation du pas lorsque la rotation du rotor 13 est arrêtée. Le dispositif de blocage 22 peut ainsi interdire toute rotation des pales 131,132 autour de leurs axes de pas AXPAS respectifs. Les pales 131,132 peuvent être bloquées avec une valeur de pas prédéterminée afin par exemple que les pales 131,132 génèrent une portance prédéterminée, par exemple de l'ordre de 10% de la portance totale de l'hélicoptère hybride 10 en vol de croisière.

Le système d'arrêt et de positionnement 20 peut comporter un dispositif de détermination 25 usuelle pour déterminer ou estimer une incidence de l'hélicoptère hybride 10 et un dispositif de variation de pas 23.. Le dispositif de variation de pas 23 peut piloter le mécanisme 14 de variation du pas pour déplacer les pales 131,132 autour de leurs axes de pas AXPAS respectifs en fonction de l'incidence de l'hélicoptère hybride 10 selon une loi préétablie et mémorisée lorsque la rotation du rotor 13 est arrêtée.

De la sorte, le pas des pales 131,132 peut être ajusté en fonction des variations d'incidence de l'hélicoptère hybride 10 afin que la portance générée par les pales 131,132 soit modifiée lorsque la rotation du rotor 13 est arrêtée et lorsque l'incidence de l'hélicoptère hybride 10 varie.

En outre, afin de limiter une augmentation des charges aérodynamiques sur les pales 131,132, et notamment la pale en secteur reculant, lorsque la rotation du rotor 13 est arrêtée, la longueur du levier de pas 138 reliant respectivement les bielles 141,142 de commande de pas aux pales 131,132 peut être comprise entre 15% et 60% d'une corde de la pale 131,132 et peut être par exemple égale à 50% de cette corde. Cette corde est par exemple égale à une corde moyenne calculée sur l'envergure de la pale 131,132.

Selon la figure 2, le rotor 13 comporte une tête de rotor 136 reliée à chacune des pales 131,132 par des articulations 133,134 respectives. Chaque articulation 133,134 autorise des mouvements de rotation de la pale 131,132 associée par rapport à la tête de rotor 136 autour d'un axe de battement AXBAT orienté tangentiellement par rapport à l'axe de rotation AXROT, à savoir de façon tangente à un cercle centré sur un point de l'axe de rotation AXROT, et autour d'un axe de traînée AXTR orienté parallèlement à l'axe de rotation AXROT. Un tel rotor 13 peut être considéré comme comportant un moyeu dit « articulé ». Dans cette configuration du rotor 13, le système d'arrêt et de positionnement 20 peut comporter un dispositif de bridage 24 pour bloquer des mouvements de rotation des pales 131,132 autour de l'axe de battement AXBAT et autour de l'axe de traînée AXTR lorsque la rotation du rotor 13 est arrêtée. Par exemple, le dispositif de bridage 24 peut bloquer les articulations 133,134. Le dispositif de bridage 24 peut par exemple comporter des butées escamotables qui s'effacent sous l'action de la force centrifuge lors de la rotation des pales 131,132 et qui bloquent les articulations 133,134 lorsque la rotation des pales 131,132 est arrêtée. De la sorte, les mouvements des pales 131,132 autour des axes de battement AXBAT et/ou de traînée AXTR sont autorisés lorsque les pales 131,132 sont en rotation autour de l'axe de rotation AXROT. A contrario, lorsque la rotation des pales 131,132 est arrêtée, les mouvements des pales 131,132 autour de ces axes de battement AXBAT et/ou de traînée AXTR sont interdits par les butées escamotables.

Selon la figure 3, le rotor 13 comporte une tête de rotor 136 à laquelle sont reliées directement les pales 131,132. Un tel rotor 13 peut être considéré comme comportant un moyeu dit « rigide ». Un tel moyeu rigide peut autoriser des mouvements de la pale 131,132 par rapport à la tête de rotor 136 autour d'un axe de battement AXBAT orienté tangentiellement par rapport à l'axe de rotation AXROT et autour d'un axe de traînée AXTR orienté parallèlement à l'axe de rotation AXROT dans les limites de souplesse des pales 131,132. Dans cette configuration du rotor 13, le système d'arrêt et de positionnement 20 ne comporte aucun dispositif de bridage susceptible de bloquer en rotation les pales 131,132 autour de ces axes de battement AXBAT et de traînée AXTR.

Enfin, la figure 5 représente un schéma illustrant un procédé d'arrêt d'une rotation du rotor 13 de l'hélicoptère hybride 10 en vol de croisière. Ce procédé peut comporter les étapes suivantes :
- désengagement 110 du rotor 13 et de la première chaîne de transmission mécanique 181 en vol de croisière, dès que la vitesse d'avancement de l'hélicoptère hybride 10 par rapport à l'air est supérieure à une vitesse seuil,
- freinage 120 de la rotation du rotor 13 autour de l'axe de rotation AXROT,
- arrêt 130 de la rotation du rotor 13, les pales 131,132 étant arrêtées à une position d'arrêt de sorte à être positionnées perpendiculairement à un axe de roulis X de l'hélicoptère hybride 10, et
- verrouillage 140 en rotation du rotor 13 autour de l'axe de rotation AXROT.

Le procédé peut comporter une étape supplémentaire de mise 150 à une valeur de pas prédéterminée des pales 131,132, le mécanisme 14 de variation du pas agissant sur les pales 131,132 pour modifier leurs pas autour de leurs axes de pas AXPAS respectifs.

Le procédé peut comporter une étape supplémentaire de blocage 160 du mécanisme 14 de variation du pas. Les pales 131,132 peuvent être bloquées avec une valeur de pas prédéterminée afin par exemple que les pales 131,132 génèrent une portance prédéterminée.

Le procédé peut comporter deux étapes supplémentaires, une étape de mesure 170 d'une incidence de l'hélicoptère hybride 10 et une étape de variation 180 du pas des pales 131,132 autour des axes de pas AXPAS respectifs à l'aide du mécanisme 14 en fonction de l'incidence.

Lorsque le rotor 13 comporte un moyeu articulé, le procédé peut comporter une étape supplémentaire de bridage 190 pour bloquer en rotation les pales 131,132 autour de l'axe de battement AXBAT et autour de l'axe de traînée AXTR.

Le procédé peut comporter une étape supplémentaire de réengagement 200 du rotor 13 avec la première chaîne de transmission mécanique 181 dès que la vitesse d'avancement de l'hélicoptère hybride 10 par rapport à l'air est inferieure à la vitesse seuil.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Hélicoptère hybride (10) comportant :
- une cellule (11),
- un rotor (13) de sustentation comportant deux pales (131,132) diamétralement opposées,
- un mécanisme (14) pour faire varier un pas desdites pales (131,132) autour d'axes de pas (AXPAS) respectifs,
- une aile (12) composée de deux demi-ailes (121,122) agencées de part et d'autre de ladite cellule (11),
- au moins une hélice (15,16) d'avancement,
- une installation motrice (17) relié au rotor (13) par une première chaîne de transmission mécanique (181), et
- un système d'arrêt et de positionnement (20) configuré pour arrêter une rotation dudit rotor (13) autour d'un axe de rotation (AXROT) en vol de croisière, et pour positionner lesdites pales (131,132) dans une position d'arrêt, perpendiculairement à une direction parallèle à un axe de roulis (X) dudit hélicoptère hybride (10),
dans lequel ledit système d'arrêt et de positionnement (20) comporte un dispositif de détermination (25) d'une incidence pour déterminer une incidence dudit hélicoptère hybride (10) et un dispositif de variation de pas (23) pilotant ledit mécanisme (14) pour déplacer lesdits pales (131,132) autour desdits axes de pas (AXPAS) respectifs en fonction de ladite incidence lorsque ladite rotation desdites pales (131,132) autour dudit axe de rotation (AXROT) est arrêtée.

2. Hélicoptère hybride (10) selon la revendication 1,
pour lequel lesdites pales (131,132) comportent des profils aérodynamiques (135) bidirectionnels permettant des comportements aérodynamiques identiques desdites pales (131,132) qu'elles soient balayées par un flux d'air d'un bord d'attaque (BA) desdits profils aérodynamiques (135) vers un bord de fuite (BF) desdits profils aérodynamiques (135) ou par un flux d'air dudit bord de fuite (BF) vers ledit bord d'attaque (BA).

3. Hélicoptère hybride (10) selon la revendication 1,
pour lequel lesdites pales (131,132) comportent des profils elliptiques.

4. Hélicoptère hybride (10) selon l'une quelconque des revendications 1 à 3,
pour lequel ledit hélicoptère hybride (10) comprend au moins deux hélices (15,16) agencées respectivement sur lesdites deux demi-ailes (121,122).

5. Hélicoptère hybride (10) selon l'une quelconque des revendications 1 à 4,
pour lequel ledit système d'arrêt et de positionnement (20) comporte un dispositif d'alignement (27) desdites pales (131,132) permettant de vérifier une position desdites pales (131,132) autour dudit axe de rotation (AXROT).

6. Hélicoptère hybride (10) selon l'une quelconque des revendications 1 à 5,
pour lequel ledit système d'arrêt et de positionnement (20) comporte un dispositif de désengagement (21) agencé entre ledit rotor (13) et ladite première chaîne de transmission mécanique (181) pour désengager de façon réversible ledit rotor (13) et ladite première chaîne de transmission mécanique (181).

7. Hélicoptère hybride (10) selon l'une quelconque des revendications 1 à 6,
pour lequel ledit système d'arrêt et de positionnement (20) comporte un dispositif de blocage (22) de pas pour bloquer ledit mécanisme (14).

8. Hélicoptère hybride (10) selon l'une quelconque des revendications 1 à 7,
pour lequel ledit mécanisme (14) comporte deux bielles de commande de pas (141,142) reliées respectivement à chacune desdites deux pales (131,132), chaque bielle de commande de pas (141,142) étant reliée à une desdites pales (131,132) avec un levier de pas (138) en avant d'un bord d'attaque (BA) de ladite pale (131,132), une longueur dudit levier de pas (138) étant comprise entre 15% et 60% d'une corde de ladite pale (131,132).

9. Hélicoptère hybride (10) selon l'une quelconque des revendications 1 à 8,
pour lequel le rotor (13) comporte une tête de rotor (136) et deux articulations (133,134) reliant respectivement lesdites pales (131,132) à ladite tête de rotor (136), chaque pale (131,132) étant, grâce à au moins une desdites articulations (133,134), mobile en rotation par rapport à ladite tête de rotor (136) autour d'un axe de battement (AXBAT) orienté tangentiellement par rapport audit axe de rotation (AXROT) et autour d'un axe de traînée (AXTR) parallèle audit axe de rotation (AXROT), ledit système d'arrêt et de positionnement (20) comportant un dispositif de bridage (24) pour bloquer en rotation lesdites pales (131,132) autour dudit axe de battement (AXBAT) et autour dudit axe de traînée (AXTR).

10. Hélicoptère hybride (10) selon l'une quelconque des revendications 1 à 9,
pour lequel ledit système d'arrêt et de positionnement (20) comporte un frein (29) pour freiner la rotation dudit rotor (13) autour dudit axe de rotation (AXROT).

11. Hélicoptère hybride (10) selon l'une quelconque des revendications 1 à 10,
pour lequel ledit système d'arrêt et de positionnement (20) comporte un dispositif de verrouillage (28) pour verrouiller lesdites pales (131,132) dans ladite position d'arrêt.

12. Procédé d'arrêt d'une rotation d'un rotor (13) de sustentation d'un hélicoptère hybride (10) en vol de croisière, ledit hélicoptère hybride (10) comportant :
- une cellule (11),
- un rotor (13) comportant deux pales (131,132) diamétralement opposées,
- un mécanisme (14) pour faire varier un pas desdites pales (131,132) autour d'axes de pas (AXPAS) respectifs,
- une aile (12) composée de deux demi-ailes (121,122) agencées de part et d'autre de ladite cellule (11),
- au moins une hélice (15,16) d'avancement,
- une installation motrice (17) relié au rotor (13) par une première chaîne de transmission mécanique (181), ladite installation motrice (17) entraînant en rotation ledit rotor (13) et ladite au moins une hélice (15,16),et
- un dispositif de mesure d'une vitesse (175) déterminant une vitesse d'avancement dudit hélicoptère hybride (10) par rapport à l'air,
ledit procédé comportant les étapes suivantes :
- désengagement (110) dudit rotor (13) et de ladite première chaîne de transmission mécanique (181) en vol de croisière, dès que ladite vitesse d'avancement dudit hélicoptère hybride (10) par rapport à l'air est supérieure à une vitesse seuil,
- freinage (120) de ladite rotation dudit rotor (13) autour dudit axe de rotation (AXROT),
- arrêt (130) de ladite rotation dudit rotor (13), lesdites pales (131,132) étant arrêtées à une position d'arrêt de sorte à être positionnées perpendiculairement à une direction parallèle à un axe de roulis (X) dudit hélicoptère hybride (10),
- verrouillage (140) en rotation dudit rotor (13) autour dudit axe de rotation (AXROT),
- mesure (170) d'une incidence dudit hélicoptère hybride (10), et
- variation (180) du pas desdits pales (131,132) en fonction de ladite incidence.

13. Procédé selon la revendication 12,
pour lequel ledit procédé comporte une mise (150) à une valeur de pas prédéterminée desdits pales (131,132), ledit mécanisme (14) agissant sur lesdites pales (131,132) pour modifier leurs pas autour desdits axes de pas (AXPAS) respectifs.

14. Procédé selon l'une quelconque des revendications 12 à 13,
pour lequel ledit procédé comporte un blocage (160) dudit mécanisme (14).

15. Procédé selon l'une quelconque des revendications 12 à 14,
pour lequel chaque pale (131,132) étant mobile par rapport à une tête de rotor (136) par l'intermédiaire d'articulations (133,134) autour d'un axe de battement (AXBAT) orienté tangentiellement par rapport audit axe de rotation (AXROT) et autour d'un axe de traînée (AXTR) parallèle audit axe de rotation (AXROT), ledit procédé comporte un blocage (190) pour bloquer en rotation lesdites pales (131,132) autour dudit axe de battement (AXBAT) et autour dudit axe de traînée (AXTR).

16. Procédé selon l'une quelconque des revendications 12 à 15,
pour lequel ledit procédé comporte un réengagement (200) dudit rotor (13) avec ladite première chaîne de transmission mécanique (181) dès que ladite vitesse d'avancement dudit hélicoptère hybride (10) par rapport à l'air est inferieure à ladite vitesse seuil.

## Patentansprüche

1. Hybridhubschrauber (10) mit:
- einer Kabine (11),
- einem Hubrotor (13) mit zwei diametral gegenüberliegenden Blättern (131, 132),
- einem Mechanismus (14) zum Verstellen des Anstellwinkels der Blätter (131, 132) um jeweilige Anstellwinkelachsen (AXPAS),
- einem Flügel (12), der aus zwei beiderseits der Kabine (11) angeordneten Flügelhälften (121, 122) besteht,
- mindestens einem Vorwärtspropeller (15, 16),
- einem Triebwerk (17), das über einen ersten mechanischen Antriebsstrang (181) mit dem Rotor (13) verbunden ist, und
- einem Stopp- und Positioniersystem (20), das konfiguriert ist, um im Reiseflug eine Drehung des Rotors (13) um eine Rotationsachse (AXROT) zu stoppen und die Blätter (131, 132) in einer Stoppposition senkrecht zu einer zu einer Rollachse (X) des Hybridhubschraubers (10) parallelen Richtung zu positionieren,
wobei das Stopp- und Positioniersystem (20) eine Inzidenzbestimmungsvorrichtung zur Bestimmung (25) einer Inzidenz des Hybridhubschraubers (10) und eine Anstellwinkelveränderungsvorrichtung (23) umfasst, die den Mechanismus (14) zum Verstellen der Blätter (131, 132) um die jeweiligen Anstellwinkelachsen (AXPAS) in Abhängigkeit von der Inzidenz steuert, wenn die Drehung der Blätter (131, 132) um die Drehachse (AXROT ) angehalten ist.

2. Hybridhubschrauber (10) nach Anspruch 1,
bei dem die Blätter (131, 132) bidirektionale aerodynamische Profile (135) aufweisen, die identische aerodynamische Verhaltensweisen der Blätter (131, 132) unabhängig davon ermöglichen, ob sie von einem Luftstrom von einer Vorderkante (BA) der aerodynamischen Profile (135) zu einer Hinterkante (BF) der aerodynamischen Profile (135) oder durch einen Luftstrom von der Hinterkante (BF) zur Vorderkante (BA) überstrichen werden.

3. Hybridhubschrauber (10) nach Anspruch 1,
bei dem die Blätter (131, 132) elliptische Profile aufweisen.

4. Hybridhubschrauber (10) nach einem der Ansprüche 1 bis 3,
wobei der Hybridhubschrauber (10) mindestens zwei Propeller (15, 16) umfasst, die jeweils an den beiden Flügelhälften (121, 122) angeordnet sind.

5. Hybridhubschrauber (10) nach einem der Ansprüche 1 bis 4,
bei dem das Stopp- und Positioniersystem (20) eine Vorrichtung (27) zum Ausrichten der Blätter (131, 132) umfasst, die es ermöglicht, eine Position der Blätter (131, 132) um die Drehachse (AXROT) zu überprüfen.

6. Hybridhubschrauber (10) nach einem der Ansprüche 1 bis 5,
bei dem das Stopp- und Positioniersystem (20) eine Entkoppelvorrichtung (21) umfasst, die zwischen dem Rotor (13) und dem ersten mechanischen Antriebsstrang (181) angeordnet ist, um den Rotor (13) und den ersten mechanischen Antriebsstrang (181) reversibel zu entkoppeln.

7. Hybridhubschrauber (10) nach einem der Ansprüche 1 bis 6,
bei dem das Stopp- und Positioniersystem (20) eine Blattverstellsperre (22) zum Sperren des Mechanismus (14) umfasst.

8. Hybridhubschrauber (10) nach einem der Ansprüche 1 bis 7,
bei dem der Mechanismus (14) zwei Anstellwinkelsteuerstangen (141, 142) aufweist, die jeweils mit einem der beiden Blätter (131, 132) verbunden sind, wobei jede Anstellwinkelsteuerstange (141, 142) mit einem der Blätter (131, 132) über einen Verstellhebel (138) vor einer Vorderkante (BA) des Flügels (131, 132) verbunden ist und eine Länge des Verstellhebels (138) zwischen 15 % und 60 % einer Sehne des Flügels (131, 132) beträgt.

9. Hybridhubschrauber (10) nach einem der Ansprüche 1 bis 8,
bei dem der Rotor (13) einen Rotorkopf (136) und zwei Gelenke (133, 134) aufweist, die die Blätter (131, 132) jeweils mit dem Rotorkopf (136) verbinden, wobei jedes Blatt (131, 132) durch mindestens eines der Gelenke (133, 134) in Bezug auf den Rotorkopf (136) um eine Schlagachse (AXBAT), die tangential zur Drehachse (AXROT) ausgerichtet ist, und um eine Schleppachse (AXTR), die parallel zur Drehachse (AXROT) verläuft, drehbar ist, wobei das Stopp- und Positioniersystem (20) eine Spannvorrichtung (24) zum Blockieren der Rotation der genannten Rotorblätter (131, 132) um die Schlagachse (AXBAT) und um die Schleppachse (AXTR) umfasst.

10. Hybridhubschrauber (10) nach einem der Ansprüche 1 bis 9,
bei dem das Stopp- und Positioniersystem (20) eine Bremse (29) zum Abbremsen der Drehung des Rotors (13) um die Drehachse (AXROT) aufweist.

11. Hybridhubschrauber (10) gemäß einem der Ansprüche 1 bis 10,
bei dem das Stopp- und Positioniersystem (20) eine Verriegelungsvorrichtung (28) zum Verriegeln der Blätter (131, 132) in der Stoppposition aufweist.

12. Verfahren zum Stoppen einer Rotation eines Hubrotors (13) eines Hybridhubschraubers (10) im Reiseflug, wobei der Hybridhubschrauber (10) umfasst:
- eine Kabine (11),
- einen Rotor (13) mit zwei diametral gegenüberliegenden Blättern (131, 132),
- einen Mechanismus (14) zum Verstellen des Anstellwinkels der Blätter (131, 132) um jeweilige Anstellwinkelachsen (AXPAS),
- einen Flügel (12), der aus zwei beiderseits der Kabine (11) angeordneten Flügelhälften (121, 122) besteht,
- mindestens einen Vorwärtspropeller (15, 16),
- ein Triebwerk (17), das über einen ersten mechanischen Antriebsstrang (181) mit dem Rotor (13) verbunden ist, wobei das Triebwerk (17) den Rotor (13) und den mindestens einen Propeller (15, 16) drehantreibt, und
- eine Geschwindigkeitsmessvorrichtung (175), die eine Vorwärtsgeschwindigkeit des Hybridhubschraubers (10) in Bezug auf die Luft bestimmt,
wobei das Verfahren die folgenden Schritte umfasst:
- Entkoppeln (110) des Rotors (13) und des ersten mechanischen Antriebsstrangs (181) im Reiseflug, sobald die Vorwärtsgeschwindigkeit des Hybridhubschraubers (10) relativ zur Luft größer als eine Schwellengeschwindigkeit ist,
- Bremsen (120) der Drehung des Rotors (13) um die Drehachse (AXROT),
- Anhalten (130) der Drehung des Rotors (13), wobei die Blätter (131, 132) in einer solchen Stoppposition angehalten werden, dass sie senkrecht zu einer Richtung parallel zu einer Rollachse (X) des Hybridhubschraubers (10) positioniert sind,
- Verriegeln (140) des Rotors (13) in Drehung um die Drehachse (AXROT),
- Messen (170) einer Inzidenz des Hybridhubschraubers (10) und
- Variieren (180) des Anstellwinkels der Blätter (131, 132) in Abhängigkeit von der Inzidenz.

13. Verfahren nach Anspruch 12,
wobei das Verfahren ein Einstellen (150) der Flügel (131, 132) auf einen vorgegebenen Anstellwinkel umfasst, wobei der Mechanismus (14) auf die Blätter (131, 132) einwirkt, um deren Anstellwinkel um die jeweiligen Anstellachsen (AXPAS) zu verändern.

14. Verfahren nach einem der Ansprüche 12 bis 13,
wobei das Verfahren ein Blockieren (160) des Mechanismus (14) umfasst.

15. Verfahren nach einem der Ansprüche 12 bis 14,
bei dem jedes Blatt (131, 132) über Gelenke (133, 134) um eine Schlagachse (AXBAT), die tangential zur Drehachse (AXROT) ausgerichtet ist, und um eine Schleppachse (AXTR), die parallel zur Drehachse (AXROT) ist, relativ zu einem Rotorkopf (136) beweglich ist, und das Verfahren ein Blockieren (190) umfasst, um die Rotation der Blätter (131, 132) um die Schlagachse (AXBAT) und um die Schleppachse (AXTR) zu blockieren.

16. Verfahren nach einem der Ansprüche 12 bis 15,
wobei das Verfahren ein Wiederankoppeln (200) des Rotors (13) an den ersten mechanischen Antriebsstrang (181) umfasst, sobald die Vorwärtsgeschwindigkeit des Hybridhubschraubers (10) relativ zur Luft unter der Schwellengeschwindigkeit liegt.

## Claims

1. Hybrid helicopter (10) having:
- a fuselage (11),
- a lift rotor (13) comprising two diametrically opposed blades (131,132),
- a mechanism (14) for varying the pitch of said blades (131,132) about respective pitch axes (AXPAS),
- a wing (12) composed of two half-wings (121,122) arranged on either side of said fuselage (11),
- at least one propulsion propeller (15,16),
- a powerplant (17) connected to the rotor (13) by a first mechanical transmission chain (181) and
- a stopping and positioning system (20) configured to stop the rotation of said rotor (13) about a rotational axis (AXROT) in cruise flight and to position said blades (131,132) in a stop position, perpendicularly to a direction parallel to a roll axis (X) of said hybrid helicopter (10),
wherein said stopping and positioning system (20) has an angle of attack determination device (25) for determining an angle of attack of said hybrid helicopter (10) and a pitch variation device (23) controlling said mechanism (14) to move said blades (131,132) about said respective pitch axes (AXPAS) according to said angle of attack when the rotation of said blades (131,132) about said rotational axis (AXROT) is stopped.

2. Hybrid helicopter (10) according to Claim 1,
wherein said blades (131,132) have bidirectional aerodynamic profiles (135) allowing identical aerodynamic behaviour of said blades (131,132) whether they are swept by an airflow from a leading edge (BA) of said aerodynamic profiles (135) to a trailing edge (BF) of said aerodynamic profiles (135) or by an airflow from said trailing edge (BF) to said leading edge (BA).

3. Hybrid helicopter (10) according to Claim 1,
wherein said blades (131,132) have elliptical profiles.

4. Hybrid helicopter (10) according to any one of Claims 1 to 3,
wherein said hybrid helicopter (10) comprises at least two propellers (15,16) arranged on said two half-wings (121,122), respectively.

5. Hybrid helicopter (10) according to any one of Claims 1 to 4,
wherein said stopping and positioning system (20) comprises an alignment device (27) of said blades (131,132) for verifying the position of said blades (131,132) around said rotational axis (AXROT).

6. Hybrid helicopter (10) according to any one of Claims 1 to 5,
wherein said stopping and positioning system (20) comprises a disengagement device (21) arranged between said rotor (13) and said first mechanical transmission chain (181) to reversibly disengage said rotor (13) and said first mechanical transmission chain (181).

7. Hybrid helicopter (10) according to any one of Claims 1 to 6,
wherein said stopping and positioning system (20) comprises a pitch locking device (22) for locking said mechanism (14).

8. Hybrid helicopter (10) according to any one of Claims 1 to 7,
wherein said mechanism (14) has two pitch control rods (141,142) connected to each of said two blades (131,132), respectively, each pitch control rod (141,142) being connected to one of said blades (131,132) with a pitch lever (138) in front of a leading edge (BA) of said blade (131,132), a length of said pitch lever (138) being between 15% and 60% of a chord of said blade (131,132).

9. Hybrid helicopter (10) according to any one of Claims 1 to 8,
wherein the rotor (13) has a rotor head (136) and two hinges (133,134) connecting said blades (131,132) to said rotor head (136), respectively, each blade (131,132) being, thanks to at least one of said hinges (133,134), rotatable relative to said rotor head (136) about a flapping axis (AXBAT) tangentially oriented with respect to said rotational axis (AXROT) and about a drag axis (AXTR) parallel to said rotational axis (AXROT), said stopping and positioning system (20) comprising a locking device (24) for locking said blades (131,132) in rotation about said flapping axis (AXBAT) and about said drag axis (AXTR).

10. Hybrid helicopter (10) according to any one of Claims 1 to 9,
wherein said stopping and positioning system (20) has a brake (29) for braking the rotation of said rotor (13) about said rotational axis (AXROT).

11. Hybrid helicopter (10) according to any one of Claims 1 to 10,
wherein said stopping and positioning system (20) has a locking device (28) for locking said blades (131,132) in said stop position.

12. Method for stopping the rotation of a lift rotor (13) of a hybrid helicopter (10) in cruise flight, said hybrid helicopter (10) having:
- a fuselage (11),
- a rotor (13) having two diametrically opposed blades (131,132)
- a mechanism (14) for varying the pitch of said blades (131,132) about respective pitch axes (AXPAS),
- a wing (12) composed of two half-wings (121,122) arranged on either side of said fuselage (11),
- at least one propulsion propeller (15,16),
- a powerplant (17) connected to the rotor (13) via a first mechanical transmission chain (181), said powerplant (17) driving said rotor (13) and said at least one propulsion propeller (15,16) in rotation, and
- a speed measurement device (175) for determining the airspeed of said hybrid helicopter (10) relative to the air,
said method comprising the following steps:
- disengaging (110) said rotor (13) from said first mechanical transmission chain (181) in cruise flight, as soon as said airspeed of said hybrid helicopter (10) relative to the air exceeds a threshold speed,
- braking (120) the rotation of said rotor (13) about said rotational axis (AXROT),
- stopping (130) the rotation of said rotor (13), said blades (131,132) being stopped in a stop position so as to be positioned perpendicularly to a direction parallel to a roll axis (X) of said hybrid helicopter (10),
- locking (140) the rotation of said rotor (13) about said rotational axis (AXROT),
- measuring (170) an angle of attack of said hybrid helicopter (10), and
- varying (180) the pitch of said blades (131,132) according to said angle of attack.

13. Method according to Claim 12,
wherein said method comprises setting (150) said blades (131,132) to a predetermined pitch value, said mechanism (14) acting on said blades (131,132) to modify their pitch about said respective pitch axes (AXPAS).

14. Method according to any one of Claims 12 to 13,
wherein said method involves a locking step (160) of said mechanism (14).

15. Method according to any one of Claims 12 to 14,
wherein each blade (131,132) is movable relative to a rotor head (136) by means of hinges (133,134) about a flapping axis (AXBAT) tangentially oriented with respect to said rotational axis (AXROT) and about a drag axis (AXTR) parallel to said rotational axis (AXROT), said method involving a locking step (190) for locking said blades (131,132) in rotation about said flapping axis (AXBAT) and about said drag axis (AXTR).

16. Method according to any one of Claims 12 to 15,
wherein said method involves re-engaging (200) said rotor (13) with said first mechanical transmission chain (181) as soon as said propulsion speed of said hybrid helicopter (10) relative to the air falls below said threshold speed.
